# DEMANDE DE BREVET EUROPEEN

(11) **EP 0 720 331 A1**
(43) Date de publication de la demande: **03.07.1996**
(21) Numéro de dépôt: 95402933.6
(22) Date de dépôt: 22.12.1995
(51) Int. Cl.: H04L 12/44

(54) **Agencement de chaînage entre modules intermédiaires, notamment de type répéteur et installation ainsi équipée**

(30) Priorité: 28.12.1994 FR 9415789
(71) Demandeur: ALCATEL BUSINESS SYSTEMS, F-75008 Paris (FR)
(72) Inventeur: Le Guen, Marie-Pierre, F-29200 Brest (FR); Roux, Raphael, F-95100 Argenteuil (FR); Kersale, Philippe, F-29200 Brest (FR); Le Page, Pascale, F-29200 Brest (FR)
(74) Mandataire: Schaub, Bernard

(57) **Abrégé**

Agencement de chaînage entre modules intermédiaires (14), notamment de type répéteur, desservant des terminaux émetteurs-récepteurs (0) communiquant par une liaison numérique de transmission de paquets (LP), commune, dans une installation de communication.

Chaque module a une entrée de signal de contrôle d'accès (acki) reliée en sortie d'un premier circuit logique concentrateur (15) individuel, ce circuit comportant "p" entrées susceptibles d'être reliées chacune à une sortie de signal de contrôle d'accès (acko) de "p" modules différents. Chaque module a sa sortie de signal de contrôle d'accès reliée à un circuit de diffusion (16) permettant d'attaquer simultanément les entrées de signal de contrôle d'accès de "p" modules différents.

## Description

L'invention concerne les agencements de chaînage entre modules intermédiaires, notamment de type répéteur, pour installation de communication comportant des terminaux émetteurs-récepteurs communiquant par l'intermédiaire d'une liaison de transmission de paquets commune à laquelle ils sont reliés par les modules. Elle concerne aussi les installations de communication équipées de tels agencements.

Il existe de nombreuses installations de communication comportant des terminaux émetteurs-récepteurs qui communiquent entre eux par l'intermédiaire d'une liaison de transmission de paquets commune qu'ils exploitent en temps partagé, chacun émettant en fonction de ses besoins, lorsque la liaison est disponible. Ces installations comportent classiquement des modules, intermédiaires, chargés des opérations de mise en communication pour un ou plusieurs terminaux émetteurs-récepteurs auxquels ils sont alors affectés.

Pour diverses raisons et notamment des raisons de coût, ces modules ont souvent une fonction de concentration et sont donc partagés par plusieurs terminaux émetteurs-récepteurs.

De plus ces modules assurent souvent en supplément une uniformisation des signaux transmis entre un terminal en émission et un terminal en réception en régénérant ces signaux pour qu'ils soient toujours compris entre des limites d'admission déterminées.

Il existe des modules appelés répéteurs qui sont réalisés pour remplir de telles fonctions dans le cas de liaisons de transmission de paquets communes telles qu'envisagées ci-dessus, en particulier dans le cas des liaisons prévues pour réaliser des réseaux locaux, tel que par exemple un réseau normalisé de type ETHERNET.

Pour profiter au maximum des possibilités de transmission offertes par une liaison commune partagée de cette manière dans le cadre d'une même installation, il est connu de régir l'ensemble que forment les modules et la liaison commune à laquelle ils sont connectés au travers d'un réseau auxiliaire de liaisons de commande reliées aux modules.

Dans une forme connue de réalisation, chaque module comporte une entrée prévue pour recevoir un signal bloquant de contrôle d'accès, de type binaire, indiquant si la liaison commune lui est accessible ou non et si en conséquence il peut venir y émettre des données provenant d'un terminal émetteur-récepteur auquel il est associé. Chaque module comporte aussi une sortie pour émettre le signal de contrôle d'accès, lorsqu'il est lui-même désireux d'accéder à la liaison commune en vue d'y émettre.

Il est donc connu de traiter les problèmes d'accès de modules de ce genre connectés à une liaison de transmission de paquets commune par un chaînage en série des modules qui est obtenu en reliant la sortie de signal de contrôle d'accès de l'un à l'entrée de signal de contrôle d'accès d'un autre placé en aval et ainsi de suite à partir d'un premier d'entre eux. Celui-ci est pratiquement prioritaire dès qu'il désire émettre, lorsqu'il n'y a pas déjà une émission en cours, étant entendu que tout module est apte à déterminer s'il existe une émission en cours sur la liaison de transmission commune, toute émission étant par principe transmise par la liaison commune vers tous les modules reliés à elle.

Cette solution permet de réaliser simplement le réseau auxiliaire de liaisons de commande, puisqu'une seule liaison de commande suffit à relier l'entrée de signal de contrôle d'accès d'un module à la sortie de signal de contrôle d'accès du module situé en amont de lui dans la chaîne, s'il se trouve un tel module, et puisque le module situé en amont de chaîne peut recevoir en permanence le signal de contrôle d'accès, binaire, lui indiquant que la liaison lui est accessible, en absence d'émission en cours.

Il existe cependant un risque dit de collision si plusieurs modules tentent simultanément d'émettre après avoir séparément constatés qu'il n'y avait pas d'émission en cours sur la liaison commune. Il est donc prévu une procédure classiquement dite de contention permettant de s'assurer qu'un seul des modules ayant tenté d'entrer simultanément en émission sur la liaison commune soit la source du signal de collision transmis à tous les modules. Cette procédure et les moyens qui permettent de la mettre en oeuvre au niveau des modules ne sera pas développée ici dans la mesure où elle n'a qu'un rapport indirect avec l'objet de la présente invention.

La solution à réseau auxiliaire en chaîne évoquée plus haut ne convient que lorsque le nombre de modules chaînés est limité, car elle introduit des délais de transmission des signaux de contrôle d'accès qui deviennent rapidement inacceptables. Il est rappelé à titre d'exemple que la norme IEEE 802.3 prévoit que le retard de transmission d'un paquet doit être inférieur à huit temps de bit soit 800 nanosecondes, dans le cas le plus défavorable, entre deux ports, l'un d'entrée et l'autre de sortie, pour des terminaux reliés entre eux par une liaison de transmission de paquets, via des modules de type répéteur, tels qu'envisagés ci-dessus. De plus, le fonctionnement de l'ensemble desservi par les modules chaînés est susceptible d'être gravement perturbé en cas d'interruption de la chaîne, par exemple en cas de défaut ou de rupture d'une liaison ou encore en cas de défaillance ou éventuellement de retrait d'un module.

Il est aussi connu de réaliser un réseau auxiliaire de liaisons de commande évitant les inconvénients évoqués ci-dessus et permettant de tourner la limitation en nombre de modules occasionné par le chaînage évoqué ci-dessus. Dans ce cas, l'accès des modules à une liaison de transmission de paquets qui leur est commune est régi par une logique arbitre externe auquel les entrées et sorties respectives de signaux de contrôle d'accès des différents modules sont individuellement reliées. Il n'y a plus alors de chaînage, ce qui élimine les retards qu'il occasionnait, par contre le réseau auxiliaire de liaisons de commande implique l'usage de deux fils pour les signaux de contrôle d'accès entre la logique arbitre et chacun des modules.

Mais une telle solution ne convient pas nécessairement à toutes les installations car le câblage qu'elle nécessite peut ne pas correspondre au schéma de câblage prévu pour l'installation prise dans son ensemble. Tel est le cas notamment, lorsqu'il est systématiquement prévu de raccorder toutes les unités d'une installation par un réseau d'interconnexion constitué de liaisons de type point-à-point qui sont physiquement structurées et temporellement régies chacune en fonction des besoins des deux unités que chacune relie. Un tel réseau est alors susceptible d'être subdivisé en sous-réseaux respectivement composés de liaisons de type point-à-point identiquement structurées et régies réunissant chacun des unités communiquant d'une manière identique. Il comporte par exemple au moins un sous-réseau de liaisons exploitées en mode paquet, comme dans le cas présent.

Dans une forme connue de réalisation, une carte de fond de panier portant des liaisons point-à-point appropriées permet alors d'interconnecter des cartes correspondant à des unités communiquant entre elles selon un même mode et en particulier des modules, tels qu'évoqués plus haut, pour la régie de ces modules.

L'invention propose donc un agencement de chaînage entre modules intermédiaires, pour installation de communication dotée de terminaux émetteurs-récepteurs communiquant par une liaison numérique de transmission de paquets, commune, au travers de modules intermédiaires, notamment de type répéteur, comportant chacun une entrée et une sortie pour signal de contrôle d'accès en émission à la liaison commune permettant à un module d'en bloquer un autre à l'entrée duquel il est relié par sa sortie, via une des liaisons de commande d'un sous-réseau auxiliaire reliant les entrées et sorties de signal de contrôle d'accès des "n" modules de l'installation.

Selon une caractéristique de l'invention, les modules ont chacun leur entrée de signal de contrôle d'accès reliée en sortie d'un premier circuit logique concentrateur, ce circuit comportant "p" entrées susceptibles d'être reliées chacune à une sortie de signal de contrôle d'accès de modules différents, "p" étant un nombre entier supérieur à deux, et en ce que les modules ont chacun leur sortie de signal de contrôle d'accès reliée à un circuit de diffusion permettant d'attaquer simultanément les entrées de signal de contrôle d'accès de "p" modules différents.

Selon une autre caractéristique de l'invention, un second circuit logique concentrateur est inséré entre la sortie de signal de contrôle d'accès de chaque module et le circuit de diffusion propre à ce module, ce second circuit logique concentrateur étant relié par une première entrée à la sortie de signal de contrôle d'accès du module considéré et par une seconde entrée à la sortie du premier circuit logique concentrateur du module.

Selon une autre caractéristique de l'invention, sont associés à chaque module un circuit de diffusion constitué par un premier commutateur qui est régi par une unité de commande de l'installation et qui est connecté par des liaisons point-à-point aux entrées de signal de contrôle d'accès de tous les autres modules et un second commutateur qui est également régi par ladite unité de commande et qui relie les entrées du premier circuit logique concentrateur associé au module considéré à autant de sorties individuelles de signal de contrôle d'accès des modules, ce second commutateur étant connecté par des liaisons de commande point-à-point aux sorties de contrôle d'accès de tous les autres modules.

Selon une autre caractéristique de l'invention, chaque module est associé sur une carte porteuse aux deux circuits logiques concentrateurs et aux deux commutateurs qui le desservent, cette carte venant se connecter sur une carte de fond de panier qui est notamment prévue pour recevoir d'autres cartes porteuses communiquant selon le même mode paquet et qui comporte notamment les liaisons de commande destinées à permettre d'interconnecter les entrées et sorties de signal de contrôle d'accès des modules portés par ces cartes.

Selon une autre caractéristique de l'invention, chacun des modules est simultanément relié à un nombre "p" de liaisons de commande, par les "p" d'entrées de signal de contrôle d'accès du premier circuit logique concentrateur le desservant, ce nombre "p" étant tel que chaque terminal émetteur-récepteur soit relié à tout autre terminal émetteur-récepteur de l'installation par au moins un chemin pour lequel le délai de transmission d'un signal de contrôle d'accès, au travers de la suite formée par les modules auxquels sont rattachés les terminaux considérés, les liaisons de commande, les circuits logiques concentrateurs et les commutateurs empruntés, est inférieur au retard maximal admis pour la transmission d'un paquet entre terminaux.

L'invention propose enfin une installation de communication comportant des terminaux émetteurs-récepteurs communiquant par l'intermédiaire d'une liaison de transmission de paquets commune à laquelle ils sont reliés par les modules intermédiaires, notamment de type répéteur, comportant chacun une entrée et un sortie pour signal de contrôle d'accès en émission à la liaison commune permettant à un module d'en bloquer un autre à l'entrée duquel il est relié par sa sortie, via une des liaisons de commande, de type point-à-point d'un sous-réseau auxiliaire reliant les entrées et sorties de signal de contrôle d'accès des modules de l'installation. Cette installation comporte un agencement de chaînage entre modules ayant au moins l'une des caractéristiques énoncées ci-dessus.

L'invention, ses caractéristiques et ses avantages sont précisés dans la description qui suit en liaison avec les figures évoquées ci-dessous.

La figure 1 présente un schéma de principe d'une installation de communication comportant un agencement de chaînage, selon l'invention, entre modules de desserte de terminaux communiquant entre eux par une liaison de transmission de paquets commune.

La figure 2 présente un schéma partiel d'un exemple d'agencement selon l'invention.

L'agencement de chaînage selon l'invention est plus particulièrement destiné à une installation de communications qui est susceptible de comporter une pluralité d'unités constitutives, spécialisées et modulaires qui sont amenées à communiquer entre elles suivant leurs spécialisations respectives et en fonction des services de communication mis en oeuvre, ces unités étant notamment reliées par un réseau d'interconnexion constitué de liaisons de type point-à-point qui sont physiquement structurées et temporellement régies en fonction des caractéristiques des deux unités que chacune de ces liaisons relie spécifiquement.

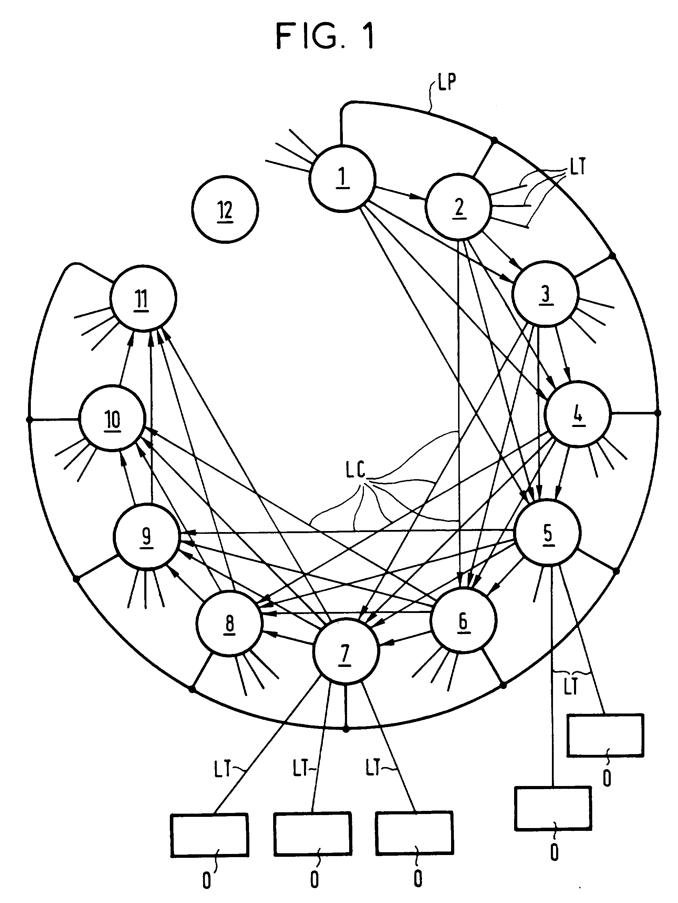

Cette installation comporte donc au minimum des terminaux émetteurs-récepteurs 0 qui sont destinés à communiquer entre eux par l'intermédiaire d'une liaison numérique commune de transmission de paquets LP auquel ces terminaux 0 sont reliés par des modules, dits intermédiaires, individuellement contenus dans des unités référencées de 1 à 11 sur la figure 1. Les "n" unités ici référencées 1 à 11 ne constituent habituellement qu'une partie des unités de l'installation évoquées plus haut, elles sont reliées entre elles par un sous-réseau de liaisons LC de type point-à-point où les liaisons sont physiquement structurées et temporellement régies de manière identique, ce sous-réseau, ici dit auxiliaire, étant l'un des éléments essentiels de l'agencement de chaînage selon l'invention.

Bien entendu l'installation est susceptible de comporter d'autres unités, ici symbolisées par une unité référencée 12, et d'autres sous-réseaux ici non représentés pour des raisons de simplification. L'unité 12 est par exemple une unité de commande principale organisée autour d'au moins un processeur et d'un ensemble mémoire.

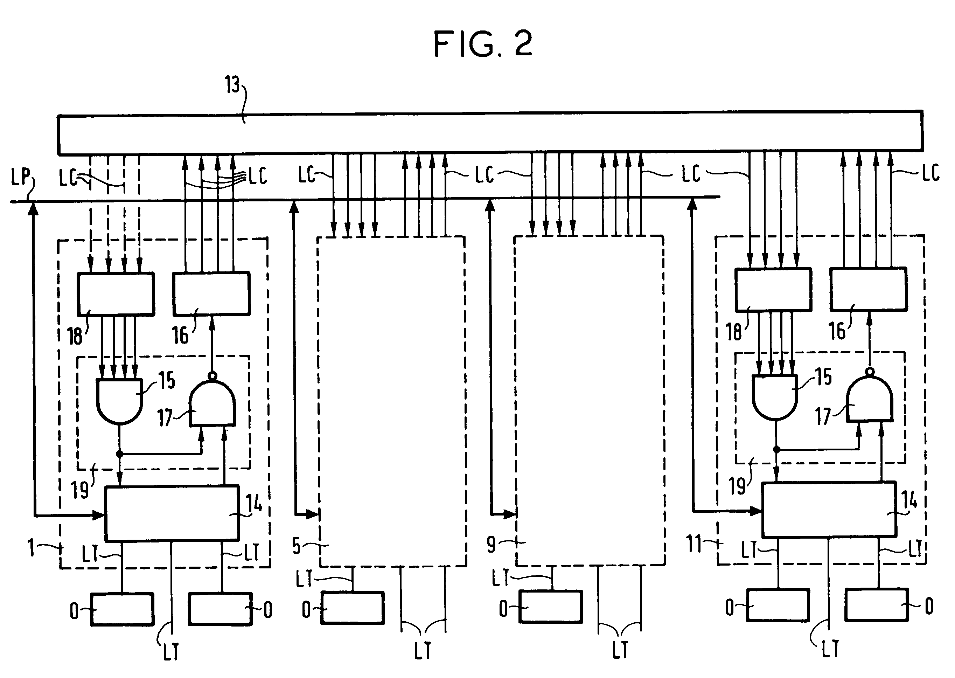

Dans la réalisation présentée, les modules contenus dans les unités 1 à 11 sont de type répéteur et correspondent par exemple à des circuits DP 83950, dits RIC, de la société NATIONAL SEMICONDUCTOR. Ils sont supervisés par des agencements de commande 19 dans les unités qui les comportent. Chaque agencement de commande 19 qui n'est pas pleinement détaillé sur la figure 2 où il est montré, étant organisé autour d'un microprocesseur auquel est associé un ensemble de mémoires, non représentés, ce microprocesseur communiquant par une interface appropriée avec le répéteur qu'il supervise.

Le module de chacune des unités 1 à 11 est supposé comporter une entrée et une sortie pour un signal de contrôle d'accès en émission à la liaison commune LP de transmission de paquets, les signaux de contrôle d'accès, ici supposés être de type logique binaire, étant destinés à être convoyés entre les modules par les liaisons LC, ici dites de commande, du sous-réseau auxiliaire interconnectant les unités de module 1 à 11. Comme indiqué plus haut chaque module est prévu pour desservir un ou plusieurs terminaux 0 qui lui sont directement rattachés par des liaisons ici référencées LT pour offrir à chacun d'entre eux de communiquer avec tous les autres terminaux 0 de l'installation par l'intermédiaire de la liaison commune LP de transmission de paquets. Ces autres terminaux 0 sont eux-mêmes reliés à cette liaison commune par l'intermédiaire de modules et via des liaisons LT.

Comme il est connu les terminaux 0 sont susceptibles d'être très divers allant du simple terminal d'abonné directement ou indirectement accessible en mode paquet au terminal serveur exploitable par un grand nombre d'utilisateurs.

Dans une forme préférée de réalisation présentée en liaison avec la figure 2, le sous-réseau auxiliaire constitué par les liaisons de commande LC est réalisée au niveau d'une carte 13, dite de fond de panier, sur laquelle des cartes correspondant notamment aux unités de module 0 à 11 viennent se raccorder en des positions de carte déterminées par l'intermédiaire de connecteurs appropriés, connus et non figurés ici.

Dans cette forme de réalisation, les connecteurs montés sur la carte de fond de panier permettent de raccorder en point-à-point et entre elles les cartes qu'ils reçoivent respectivement, notamment via les liaisons de commande LC du sous-réseau auxiliaire évoqué ci-dessus pour les unités de module 1 à 11.

Par contre, dans la réalisation envisagée la connexion de chaque module à la liaison commune LP de transmission de paquet ou plus précisément de chaque carte 1 à 11 portant un tel module est prévue au niveau d'autres connecteurs de cartes de module, non figurés et ici supposés spécifiquement prévus pour une telle liaison commune LP. Celle-ci comporte par exemple un lien de type bus à codage des données sous forme NRZ, souvent désigné sous l'appellation "INTERRIC" dans le cas de modules répéteurs dits "RIC", elle comporte bien entendu d'autres liens partagés par exemple pour le traitement des collisions.

Comme déjà indiqué, chaque module relié à la liaison commune LP comporte une entrée et une sortie de signal de contrôle d'accès en émission à cette liaison, étant entendu que cette dernière ne peut recevoir une émission que d'un seul terminal 0 et donc via un seul module à la fois et que par contre tous les modules reçoivent identiquement toute émission transmise par l'intermédiaire de la liaison commune LP.

Dans l'exemple de réalisation plus particulièrement envisagé en liaison avec la figure 2, chaque module, identiquement référencé 14 au niveau des unités 1 et 11, qui est par exemple du type répéteur déjà évoqué plus haut, est relié par son entrée de signal de contrôle d'accès, ici référencée "acki", en sortie d'un premier circuit logique concentrateur 15. Ce dernier est ici supposé réalisé à l'aide d'une porte de type ET et il est doté d'un nombre "p" d'entrées supposé égal à quatre sur cette figure 2. Il a pour fonction de transmettre à sa sortie le signal de contrôle d'accès qu'émet par sa sortie "acko" un module ayant à émettre, lorsque ce dernier est relié à l'une des "p" entrées de ce premier circuit logique 15 par une ou plusieurs liaisons de commande LC en succession, ce signal étant ici supposé de niveau binaire bas.

Chacune des "p" entrées de chaque premier circuit logique 15 associé à un module 14 dans une unité de module est prévue reliée à une extrémité d'une liaison LC différente du sous-réseau auxiliaire que porte la carte de fond de panier.

Par ailleurs chaque module 14, tel qu'évoqué plus haut en liaison avec la figure 2, est relié par sa sortie de signal de contrôle d'accès ici référencée "acko" à un circuit de diffusion 16 de l'unité contenant le module 14 considéré. Chaque circuit de diffusion 16 est par exemple constitué par un commutateur de type usuel permettant de relier la sortie "acko" du module 14 auquel il est relié à "p" liaisons de commande LC du sous-réseau auxiliaire de manière à pouvoir agir sur l'entrée de signal de contrôle d'accès de "p" modules différents en simultané.

Dans une forme préférée de réalisation, un second circuit logique concentrateur 17 est inséré entre la sortie de signal de contrôle d'accès "acko" de chaque module 14 et le circuit de diffusion 16 qui le dessert en propre. Ce second circuit logique 17 est ici supposé réalisé à l'aide d'une porte de type NAND reliée par une première entrée à la sortie "acko" du module 14 considéré et par une seconde entrée en sortie du premier circuit logique 15 qui attaque l'entrée de contrôle d'accès "acki" de ce même module, de manière à permettre la diffusion du signal de contrôle d'accès qu'il reçoit d'un module ayant à émettre qui est soit le module auquel il est relié par sa seconde entrée soit un module auquel il est relié via sa première entrée. Le fait que la première entrée d'un second circuit logique concentrateur soit reliée à la sortie du premier circuit logique concentrateur associé au même module permet une transmission du signal de contrôle d'accès, ici supposé de niveau bas, qui court-circuite le module associé aux deux circuits logiques considérés et qui permet donc d'éviter l'ajout du délai de transmission qu'introduirait ce module au temps de transfert du signal de contrôle d'accès aux divers modules de l'agencement de chaînage, ceci étant développé plus bas.

Dans une forme préférée de réalisation, un commutateur 18 est inséré entre les entrées du premier circuit logique 15 associé à un module 14 sur une carte d'unité de module et les liaisons de commande LC portées par la carte de fond de panier 13 qui relient en point-à-point les cartes d'unité de modules, ici 1 à 11, via les connecteurs, non figurés, servant à leurs raccordements respectifs.

Pour réaliser une transmission du signal de contrôle d'accès en chaîne au travers des unités, il est prévu que des entrées du premier circuit logique des "p" unités considérées en tête de chaîne soient rendues inefficaces, ces entrées étant sélectionnées suivant la configuration de l'agencement de chaînage réalisé.

Ainsi dans l'exemple présenté en figure 1, il est considéré par principe que l'unité 1, située en tête de chaîne, n'a pas à recevoir de signal de contrôle d'accès provenant d'une unité située en amont.

En conséquence, le niveau des signaux binaires appliqués de manière permanente aux entrées du premier circuit logique, non représenté en figure 1, de cette unité de tête de chaîne est fixé pour maintenir la sortie de ce circuit à un niveau qui lui interdit de bloquer tant le module à l'entrée de signal de contrôle "acki" duquel il est directement connecté que ceux des modules auquel il peut accéder par l'intermédiaire du second circuit logique de son unité à une entrée duquel il est aussi directement connecté.

Pour la même raison, le premier circuit logique de l'unité 2, située immédiatement en aval de l'unité 1 dans la chaîne présentée en figure 1, ne peut recevoir de signal de contrôle d'accès que par celle de ses entrées qui est reliée à cette unité 1 seule située en amont et il doit donc avoir ses autres entrées portées à un niveau binaire qui les rend inefficaces, comme celles du premier circuit logique de l'unité 1. Pour encore la même raison, dans ce même cas envisagé en figure 1, le premier circuit logique, non représenté de l'unité 3 et celui de l'unité 4, ne peuvent respectivement recevoir de signal de contrôle d'accès que par celles de leurs entrées respectives qui sont reliées à une unité située en amont et ont donc leurs autres entrées rendues inefficaces comme indiqué ci-dessus.

Par ailleurs, le commutateur 18 et le commutateur constituant le circuit de diffusion 16 pour un même module sont ici supposés sur la carte de l'unité comportant ce module. Il est par exemple prévu que tous les commutateurs associés aux modules sur les cartes d'unité soient commandés par les microcontrôleurs des agencements de commande 19 des unités qui les comporte, en fonction des ordres établis de manière centralisée par exemple par l'unité de commande principale 12 évoquée plus haut.

Comme indiqué plus haut, la carte de fond de panier 13 connecte toutes les cartes d'unité de modules en point-à-point entre elles par l'intermédiaire du sous-réseau auxiliaire de liaisons de commande LC. Il est donc possible d'établir et de modifier à la demande par l'intermédiaire de l'unité de commande principale 12 et des microcontrôleurs des agencements de commande 19, les connexions entre les "p" entrées d'un circuit logique concentrateur 15 et "p" des liaisons de commande LC qui sont établies entre la carte de module portant ce circuit et les autres cartes de module, étant entendu que la transmission du signal de contrôle d'accès d'un module 14 ayant à émettre vers les autres modules 14 n'implique pas que toutes les liaisons de commande LC possibles entre cartes de module soient exploitées. L'établissement des connexions entre le circuit logique concentrateur 17 et "p" des liaisons de commande LC établies entre la carte portant ce circuit et les autres cartes de module est bien entendu réalisable de manière analogue par l'intermédiaire de l'unité de commande principale 12.

Dans l'exemple présenté en figure 2, chaque module est supposé directement relié par sa sortie de signal de contrôle d'accès à quatre entrées de signal de contrôle d'accès relatives à autant de modules différents, via son circuit de diffusion et une liaison LC en point-à-point par entrée atteinte.

Le temps de transmission d'un signal de contrôle d'accès entre deux modules considérés l'un comme émetteur et l'autre comme récepteur dépend des temps de transmission de ce signal au travers des divers éléments constitutifs que traverse ce signal de ce module émetteur à ce module récepteur.

Il est donc envisageable suivant le nombre et la nature de ces éléments constitutifs de transmettre un signal au travers de liaisons de commande LC en série si la somme des temps de transmission au travers des éléments constitutifs traversés reste inférieur à une limite admissible, cette limite étant par exemple de 800 nanosecondes dans le cas évoqué dans le préambule de cette demande.

Ceci permet par exemple de transmettre les signaux de contrôle d'accès par l'intermédiaire d'une à trois liaisons de commande LC en série vers un même module. Dans le cas de la figure 1, le module supposé répéteur d'une des unités présentées par exemple l'unité 11, est ainsi susceptible de recevoir directement un signal de contrôle d'accès à partir de chaque module d'unité, relié à son entrée de signal de contrôle d'accès, comme symbolisé par les liaisons LC fléchées orientées vers cette unité 11 à partir des unités 7, 8, 9 et 10. Ce même module d'unité 11 peut aussi recevoir le signal de contrôle d'accès provenant d'une des unités reliées à l'entrée de contrôle d'accès d'une des unités 7, 8, 9 et 10, telles les unités 3, 4, 5, 6, 8, étant entendu qu'à ce stade il existe des chemins alternatifs permettant de transmettre un signal de contrôle d'accès vers l'unité 11 par l'intermédiaire de deux liaisons de commande LC en série, par exemple à partir de l'unité 3 via les unités 7 et 9 ou à partir de l'unité 6 via les unités 7 et 10.

L'existence de chemins alternatifs empruntant des liaisons prévues entre des modules différents permet d'éviter que la diffusion d'un signal de contrôle d'accès vers les autres modules de l'agencement chaîné soit totalement interrompue en cas de défaillance ou d'élimination d'un des éléments constitutifs placés sur un chemin et notamment en cas de retrait ou de mise hors service d'une carte d'unité.

Le pilotage des commutateurs 16 et 18 des unités de module par l'intermédiaire de l'unité de commande 12 permet d'effectuer une reconfiguration, partielle ou complète de l'agencement de chaînage, en cas de besoin.

Par contre, suivant le nombre d'unités choisi, il peut être nécessaire de prévoir la possibilité de transmettre un signal de contrôle d'accès par l'intermédiaire de plus de deus liaisons de commande en série pour permettre à tout module d'envoyer un signal de contrôle d'accès vers les autres. Une telle disposition est envisagée dans l'agencement de chaînage symbolisé en figure 1 où pour permettre d'atteindre le module de l'unité 11 à partir de l'unité 1, il est nécessaire que le signal de contrôle d'accès emprunte trois liaisons de commande LC en série, ces liaisons fléchées sur la figure 1 reliant par exemple l'unité 1 à l'unité 11, via les unités 5 et 9 ou 3 et 7.

Pour les raisons de sécurité déjà évoquées plus haut, la configuration est telle que deux chemins distincts permettent de relier toute unité à toute autre unité située en aval dans la chaîne, à l'exception de celle qui est la première en aval d'elle, ces chemins passant toujours par des unités intermédiaires différentes, lorsque de telles unités intermédiaires sont impliquées. Ainsi dans l'exemple donné ci-dessus, les deux chemins reliant l'unité 1 à l'unité 11 passent respectivement par les unités 5 et 9 pour l'un et par les unités 3 et 7 pour l'autre.

Suivant le nombre de modules et suivant les contraintes imposées, il est donc possible de réaliser des agencements de chaînage entre modules qui comporte un sous-réseau auxiliaire de liaisons de commande LC où chaque module est relié à tout autre module par au moins deux chemins de transmission de signal de contrôle d'accès de manière à éliminer les risques d'émissions simultanées de paquets de données par des modules différents sur la liaison de transmission de paquets LP que se partagent les modules.

## Revendications

1. Agencement de chaînage entre modules intermédiaires, pour installation de communication dotée de terminaux émetteurs-récepteurs (0) communiquant par une liaison numérique de transmission de paquets (LP), commune, au travers de modules intermédiaires (14), notamment de type répéteur, comportant chacun une entrée (acki) et une sortie (acko) pour signal de contrôle d'accès en émission à la liaison commune permettant à un module d'en bloquer un autre à l'entrée duquel il est relié par sa sortie, via une des liaisons de commande (LC), de type point-à-point, d'un sous-réseau auxiliaire reliant les entrées et sorties de signal de contrôle d'accès des "n" modules de l'installation, l'agencement de chaînage étant caractérisé en ce que les modules ont chacun leur entrée de signal de contrôle d'accès reliée en sortie d'un premier circuit logique concentrateur (15), ce circuit comportant "p" entrées susceptibles d'être reliées chacune à une sortie de signal de contrôle d'accès de modules différents, "p" étant un nombre entier supérieur à deux, et en ce que les modules ont chacun leur sortie de signal de contrôle d'accès reliée à un circuit de diffusion (16) permettant d'attaquer simultanément les entrées de signal de contrôle d'accès de "p" modules différents.

2. Agencement de chaînage, selon la revendication 1, caractérisée en ce qu'un second circuit logique concentrateur (17) est inséré entre la sortie de signal de contrôle d'accès de chaque module et le circuit de diffusion propre à ce module, ce second circuit logique concentrateur étant relié par une première entrée à la sortie de signal de contrôle d'accès du module considéré et par une seconde entrée à la sortie du premier circuit logique concentrateur (15) du module.

3. Agencement de chaînage, selon au moins l'une des revendications 1 et 2, caractérisé en ce que sont associés à chaque module un circuit de diffusion (16) constitué par un premier commutateur qui est régi par une unité de commande (12) de l'installation et qui est connecté par des liaisons point-à-point aux entrées de signal de contrôle d'accès de tous les autres modules et un second commutateur (18) qui est également régi par ladite unité de commande et qui relie les entrées du premier circuit logique concentrateur (15) associé au module considéré à autant de sorties individuelles de signal de contrôle d'accès des modules, ce second commutateur étant connecté par des liaisons de commande point-à-point aux sorties de contrôle d'accès de tous les autres modules.

4. Agencement de chaînage, selon au moins l'une des revendication 1, 2 et 3, caractérisé en ce que chaque module (14) est associé sur une carte porteuse (1 à 11) aux deux circuits logiques concentrateurs (15 et 17) et aux deux commutateurs (16 et 18) qui le desservent, cette carte venant se connecter sur une carte (13) de fond de panier qui est notamment prévue pour recevoir d'autres cartes porteuses communiquant selon le même mode paquet et qui comporte notamment les liaisons de commande (LC) destinées à permettre d'interconnecter les entrées et sorties de signal de contrôle d'accès des modules portés par ces cartes.

5. Agencement de chaînage, selon au moins l'une des revendication 1, 2, 3 et 4, caractérisé en ce que chacun des modules (14) est simultanément relié à un nombre "p" de liaisons de commande (LC), par les "p" d'entrées de signal de contrôle d'accès du premier circuit logique concentrateur (15) le desservant, ce nombre "p" étant tel que chaque terminal émetteur-récepteur soit relié à tout autre terminal émetteur-récepteur de l'installation par au moins un chemin pour lequel le délai de transmission d'un signal de contrôle d'accès, au travers de la suite formée par les modules auxquels sont rattachés les terminaux considérés, les liaisons de commande, les circuits logiques concentrateurs et les commutateurs empruntés, est inférieur au retard maximal admis pour la transmission d'un paquet entre terminaux.

6. Installation de communication comportant des terminaux émetteurs-récepteurs (0) communiquant par l'intermédiaire d'une liaison de transmission de paquets (LP) commune à laquelle ils sont reliés par les modules intermédiaires, notamment de type répéteur, comportant chacun une entrée (acki) et un sortie (acko) pour signal de contrôle d'accès en émission à la liaison commune permettant à un module d'en bloquer un autre à l'entrée duquel il est relié par sa sortie, via une des liaisons de commande (LC), de type point-à-point d'un sous-réseau auxiliaire reliant les entrées et sorties de signal de contrôle d'accès des "n" modules de l'installation, caractérisée en ce qu'elle comporte un agencement de chaînage entre modules selon au moins l'une des revendications 1 à 5.
